# EUROPEAN PATENT SPECIFICATION

(11) **EP 3 703 935 B1**
(45) Date of publication and mention of the grant of the patent: **05.04.2023**
(21) Application number: 18800425.3
(22) Date of filing: 24.10.2018
(51) Int. Cl.: B29C 64/386, B29C 64/393, B29C 64/135, B29C 64/153, B33Y 50/00, B22F 10/31, B22F 10/366, B22F 12/90, B22F 10/12, B22F 10/18, B22F 10/28, B22F 10/39, B22F 10/85, B22F 12/13, B22F 12/41, B22F 12/47, B22F 12/49, B22F 12/63, B22F 12/67

(54) **CALIBRATION OF SCANNING SYSTEMS**
KALIBRIERUNG VON ABTASTSYSTEMEN
ÉTALONNAGE DE SYSTÈMES DE BALAYAGE

(30) Priority: 30.10.2017 US 201762578952 P
(43) Date of publication of application: 09.09.2020
(73) Proprietor: Materialise NV, 3001 Leuven (BE)
(72) Inventor: DERUYCK, Jorn, 3001 Leuven (BE); VAN DEN ECKER, Piet, 3001 Leuven (BE)
(74) Representative: Abel & Imray LLP
(86) International application number: PCT/US2018/057389
(87) International publication number: WO 2019/089323

(56) References cited:
- EP-A1- 2 769 800
- EP-A1- 3 077 872
- EP-A2- 2 186 625
- WO-A1-2015/040185
- DE-A1-102009 016 585

## Description

### BACKGROUND OF THE INVENTION

### Field of the Invention

This application relates to the calibration of scanning systems such as laser scanning systems. This application relates to systems and methods for calibrating a scanning system using an image as a reference for the calibration. Calibration may be performed while the scanning system is completing tasks like building objects in an additive manufacturing apparatus.

### Description of the Related Technology

Scanning systems such as laser scanning systems are used in many different applications. One of these applications is the field of additive manufacturing, in which three dimensional solid objects are formed from a digital model. Because the manufactured objects are three dimensional, additive manufacturing is commonly referred to as three dimensional ("3D") printing. The use of laser scanning systems in additive manufacturing is especially prevalent in stereolithography and selective laser sintering ("SLS") manufacturing techniques. These techniques use scanning systems to direct a scanning beam to a specified location in order to polymerize or solidify layers of build materials which are used to create the desired three dimensional ("3D") object.

The scanning systems used in connection with additive manufacturing should provide a very high degree of precision. This high degree of precision helps to ensure that the manufactured object is consistent with the digital model. However, in order to maintain this precision over time, scanning systems may need to be calibrated for various reasons. In some instances, the calibration is necessary due to variations in the scanning beam which develop with use of the device. In other instances, temperature fluctuations may impact the accuracy of the scanning system. In addition, the geometry of the mirrors in scanning systems, such as those including galvanometers may be another source of errors.

There are a variety of existing techniques for calibrating scanning systems, but some are expensive and complex, and most require equipment and adjustments that make the techniques impractical to perform frequently. As a result, users typically calibrate the scanning systems only at select times which are convenient but which may not be frequent enough to ensure accuracy for each individual build on the additive manufacturing apparatus. For example, the scanning system may be calibrated only once after the optics have been aligned, but not in between builds. Using current methods, it is not possible to start a build when a calibration plate is positioned in the additive manufacturing device, so calibration cannot be performed during a build.

Because the accuracy of the scanning is important to the success of a build in an additive manufacturing apparatus, it would be advantageous if the scanning system could be calibrated more frequently. There remains a need in the art for methods and systems that enable convenient and frequent calibration of the scanning system at any time, even during a build.

International PCT patent publication no. WO-A-2015/040185 describes a system and method for calibrating a laser scanning system. Various embodiments involve the use of a calibration plate with reference markings which is positioned to receive a directed beam in a set of known laser scanner positions. The directed beam forms a laser spot on the calibration plate, and the laser spot is captured using an image acquisition assembly such as a digital camera along with a motorized mount. The movement of the image acquisition assembly may be coordinated with the movement of the laser scanner to track the laser spot across the plate. After photographing various positions, actual laser spot coordinates are deduced from their position relative to the known positions of the reference markings.

### SUMMARY

The present disclosure relates to a computer-implemented method and system for calibrating a scanning system in an additive manufacturing device. The method comprises directing a scanner beam from the scanning system to apply scan markings at a plurality of predefined locations in a scanning area, acquiring, using an image acquisition assembly, a scan image comprising image scan markings corresponding to the scan markings, determining scanner corrections based on position of the image scan markings and the predefined locations in the scanning area, and calibrating the scanning system using the scanner corrections, characterised by acquiring, using the image acquisition assembly, a reference image comprising a plurality of image reference markings corresponding to a plurality of reference markings on a first surface of a calibration plate that is positioned parallel to a scanning area of the scanning system and in the additive manufacturing device; and determining an error function, wherein the error function represents a difference between the plurality of image reference markings in the reference image and the plurality of reference markings on the first surface of the calibration plate, wherein the directing of the scanner beam is performed when the calibration plate is not in the scanning area, wherein the acquiring of the reference image is performed using the image acquisition assembly in a reference position, and wherein the determining of the scanner corrections is further based on the error function.

In certain embodiments, each reference marking is located at a predefined coordinate position. For example, the reference markings may comprise an ordered pattern of circular spots. The ordered pattern may be a grid pattern.

In some embodiments, the first surface of the calibration plate is positioned in the same xy plane as a build surface in the scanning area when acquiring the reference image.

The image acquisition assembly may be fixed in a location in or around the additive manufacturing device. The image acquisition assembly may comprise an optical camera.

In certain embodiments, determining the error function further comprises: selecting a region of interest in the reference image; detecting features in the region of interest, wherein the features comprise a selection of reference markings in the reference image; determining coordinate positions for the features; comparing the coordinate positions of features in the reference image with coordinate positions of reference markings on the calibration plate.

In certain embodiments, the calibration plate may be moved from a path of the image acquisition assembly before directing the scanner beam. Scan markings may comprise a pattern of spots, lines, or crosses. The scan image may comprise a single image or a stack of images, and may be acquired before all scan markings are applied. The scanning system may apply scan markings with a pilot laser.

Determining scanner corrections may further comprises selecting a region of interest in the scan image; detecting features in the region of interest, wherein the features comprise a selection of scan markings in the scan image; determining observed coordinate positions for the features; and applying the error function to obtain true coordinate positions of the features; obtaining deviation values between the true coordinate positions and the predefined locations in the scanning area; and determining scanner corrections based on the deviation values.

Obtaining deviation values may further comprise surface fitting. Calibrating the scanning system may comprise adjusting coordinate locations of a scanner in the scanning system by a distance or a factor corresponding to the scanner corrections. A further aspect of the present disclosure relates to a system for calibrating a scanning system in an additive manufacturing device, comprising: a calibration plate comprising a first surface having a plurality of reference marks, the calibration plate configured to be removably positioned parallel to a scanning area of the scanning system; a scanner configured to direct a scanner beam to the scanning area; an image acquisition assembly comprising an image acquisition device, the image acquisition device positioned in a reference position and configured to take an image of at least a portion of the scanning area during at least two time points comprising; a first time point when the calibration plate is positioned in the scanning area of the additive manufacturing device; a second time point when the scanning system has sent a scanner beam to the scanning area; a computer control system comprising one or more computers having a memory and a processor, the computer control system configured to: receive an image of the reference markings on the first surface of the calibration plate; determine an error function based on a difference between reference markings in the reference image and reference markings on the calibration plate; cause the scanning system to direct the scanner beam to a plurality of predefined locations on the scanning area, thereby creating one or more scan markings; receive an image of the scan markings; and determine scanner corrections based on position of the scan markings in the scan image, the error function, and the predefined locations in the scanning area.

### BRIEF DESCRIPTION OF THE DRAWINGS

Figure 1 illustrates an example of a computer environment suitable for the implementation of 3D object design and manufacturing.
Figure 2 illustrates a functional block diagram of one example of a computer.
Figure 3 shows a high level process for manufacturing a 3D object using the methods and systems disclosed herein.
Figure 4 is an example of a scanning system which may be calibrated using the methods and systems disclosed herein.
Figure 5A illustrates an exemplary process for acquiring a reference image. Figure 5B illustrates a surface fitting for detected features in a reference image. Figure 5C illustrates the transformation of detected coordinate positions in a reference image to true coordinate positions.
Figure 6 illustrates an exemplary method for calibrating a scanning system.
Figure 7 illustrates an exemplary deviation map over reiterative cycles of scanning and calibrating.
Figure 8 illustrates an exemplary method for processing detected features in a digital image.

### DETAILED DESCRIPTION OF CERTAIN INVENTIVE EMBODIMENTS

Embodiments of this application relate to calibrating scanning systems such as laser scanning systems used in connection with 3D printing applications. Systems and methods disclosed herein may provide a simple, inexpensive way to calibrate scanning systems used in connection with 3D printing applications.

A well-calibrated scanning system is important for building accurate parts using additive manufacturing (AM) techniques, as positional errors of the scanning system may lead to misaligned geometries or poor surface quality in the parts. To enhance accuracy, calibration may be performed often, such as after the optics have been adjusted or aligned, and also before each build or even during a build. Unfortunately, existing methods for calibrating scanning systems do not allow the ease and flexibility of frequent calibration.

In most existing methods, scanning systems are calibrated in relation to a reference plate that is positioned at a known position in the machine. The reference plate has reference markings at known (also "predefined" or "expected") locations. Although the scanner beam may be directed to those predefined locations on the reference plate, the actual (or "true") locations where the scanner beam lands are often offset due to small errors or inaccuracies in the scanning system. A comparison between the predefined locations and the actual locations, as determined with respect to the reference marking on the reference plate, may be used to determine scanner corrections, which are then applied to the scanning system in order to correct or compensate for the errors.

A first drawback of this approach is that any points of reference are lost once the calibration plate is removed or components in the scanning system are adjusted. If the calibration plate is removed from the additive manufacturing device during a build, it may be difficult to replace it in the identical position again. Moreover, once the scanning system components have been adjusted, for example during cleaning or realignment, their position relative to the plate is changed and the previous reference position is lost. In these cases, a new reference position must be made by placing the calibration plate in the machine again, and the scanning system must be calibrated in accordance with its new position relative to the calibration plate. This is time consuming, especially because components of the scanning system are frequently adjusted in additive manufacturing devices. A further drawback is that the lighting in the additive manufacturing device must be modulated to ensure that both the reference grid and the pattern scanned by the beam are detected simultaneously during the calibration. Finally, repeated calibrations may magnify errors if there are small errors in each calibration that are compounded over time.

Accordingly, there is a need in the art for new methods of calibrating scanning systems. One aspect of the present disclosure relates to calibration methods and systems that use a single reference view of a calibration plate made relative to an image acquisition assembly such as a camera or optical imaging device. The image acquisition assembly may be calibrated, so that an error function may be determined for any images acquired by the assembly. Scan images, together with an error function, may be used to determine scanner corrections in order to calibrate the scanning system. In some embodiments, the calibration of the image acquisition assembly may be performed separately from the calibration of the scanning system. Compared with the scanning system, the image acquisition assembly may have fewer adjustments made to it and fewer or no moving parts, which means that the image acquisition assembly may require less calibration.

In certain embodiments, a scanning system includes components suitable for positioning a scanning beam on a build surface. The components may comprise one or more components such as a beam source and a scanhead comprising a scanner (e.g., one or more mirrors that deflect the beam), optics such as lenses, galvanometer controls, and electronics. Exemplary scanning systems may comprise other configurations of these components and/or additional components such as imaging devices or sensors. Scanning systems for directing electron beams in electron beam melting processes may also be calibrated according to the present disclosure, as well as any system in in which light, heat, chemicals, or energy are projected, jetted, or directed using motor-driven mechanisms. In some embodiments, scanning systems may be an electromagnetic system rather than a motor-driven system, or may comprise a combination of different mechanisms. Scanning systems may correspond to subtractive manufacturing systems such as CNC machining tools, or to additive manufacturing systems. In additive manufacturing systems, components that may be calibrated include but are not limited to laser scanners in laser sintering devices; electron beam systems for example in which an electron beam is deflected using an electromagnetic control; systems for deflecting energy in the form of lasers or electron beams; rotational scanning systems configured for non-linear scanning; extruders in fused deposition modeling (FDM) devices; light sources, controllers, imaging optics and/or projectors in digital light projector (DLP) devices; and more.

A first aspect of the present disclosure relates to a method for calibrating a scanning system in an additive manufacturing device, comprising: acquiring, using an image acquisition assembly in a reference position, a reference image of a plurality of reference markings on a first surface of a calibration plate that is positioned parallel to a scanning area of the scanning system and in the additive manufacturing device; determining an error function; directing a scanner beam to apply scan markings at a plurality of predefined locations on the scanning area when the calibration plate is not in the scanning area; acquiring, use the image acquisition assembly in the reference position, a scan image of the scan markings; determining scanner corrections based on position of the scan markings in the scan image, the error function, and the predefined locations in the scanning area; and calibrating the scanning system using the scanner corrections.

A further aspect of the present disclosure relates to a system for calibrating a scanning system in an additive manufacturing device, comprising a calibration plate comprising a first surface having a plurality of reference marks, the calibration plate configured to be removably positioned parallel to a scanning area of the scanning system; a scanner configured to send a scanning beam to the scanning area; an image acquisition assembly comprising an image acquisition device, the image acquisition device positioned in a reference position and configured to take an image of at least a portion of the scanning area during at least two time points comprising; a first time point when the calibration plate is positioned in the scanning area of the additive manufacturing device; a second time point when the scanning system has sent a scanning beam to the scanning area; a computer control system comprising one or more computers having a memory and a processor, the computer control system configured to receive an image of the reference markings on the first surface of the calibration plate; determine an error function based on a difference between reference markings in the reference image and reference markings on the calibration plate; cause the scanning system to direct the scanner beam to a plurality of predefined locations on the scanning area, thereby creating one or more scan markings; receive an image of the scan markings; and determine scanner corrections based on position of the scan markings in the scan image, the error function, and the predefined locations in the scanning area.

Methods and systems disclosed herein may also use an existing reference image that has been acquired from the image acquisition assembly and stored, and/or an existing error function that has been determined prior to the calibration of the scanning system. Accordingly, an aspect of the present disclosure relates to a method for calibrating a scanning system in an additive manufacturing device, comprising: obtaining an error function, wherein the error function reflects a deviation between an observed coordinate position of a reference marking in an image acquired from an image acquisition assembly in a reference position and a true coordinate position of the reference marking; directing a scanner beam to apply scan markings at a plurality of predefined locations on the scanning area when the calibration plate is not in the scanning area; acquiring, use the image acquisition assembly in the reference position, a scan image of the scan markings; determining scanner corrections based on position of the scan markings in the scan image, the error function, and the predefined locations in the scanning area; and calibrating the scanning system using the scanner corrections.

### Additive manufacturing systems

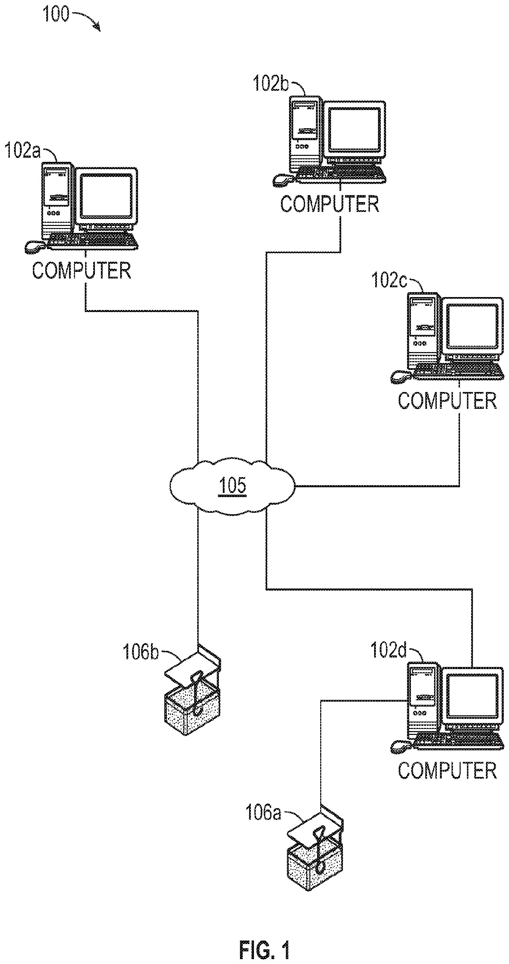

Embodiments described herein may be practiced within a system for designing and manufacturing 3D objects. Turning to Figure 1, an example of a computer environment suitable for the implementation of 3D object design and manufacturing is shown. The environment includes a system 100. The system 100 includes one or more computers 102a-102d, which can be, for example, any workstation, server, or other computing device capable of processing information. In some aspects, each of the computers 102a-102d can be connected, by any suitable communications technology (e.g., an internet protocol), to a network 105 (e.g., the Internet). Accordingly, the computers 102a-102d may transmit and receive information (e.g., software, digital representations of 3-D objects, commands or instructions to operate an additive manufacturing device, etc.) between each other via the network 105.

The system 100 further includes one or more additive manufacturing devices or apparatuses (e.g., 3-D printers) 106a-106b. As shown the additive manufacturing device 106a is directly connected to a computer 102d (and through computer 102d connected to computers 102a-102c via the network 105) and additive manufacturing device 106b is connected to the computers 102a-102d via the network 105. Accordingly, one of skill in the art will understand that an additive manufacturing device 106 may be directly connected to a computer 102, connected to a computer 102 via a network 105, and/or connected to a computer 102 via another computer 102 and the network 105.

It should be noted that though the system 100 is described with respect to a network and one or more computers, the techniques described herein also apply to a single computer 102, which may be directly connected to an additive manufacturing device 106.

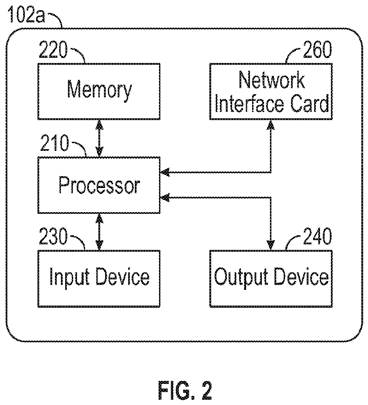

Figure 2 illustrates a functional block diagram of one example of a computer of Figure 1. The computer 102a includes a processor 210 in data communication with a memory 220, an input device 230, and an output device 240. In some embodiments, the processor is further in data communication with an optional network interface card 260. Although described separately, it is to be appreciated that functional blocks described with respect to the computer 102a need not be separate structural elements. For example, the processor 210 and memory 220 may be embodied in a single chip.

The processor 210 can be a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein. A processor may also be implemented as a combination of computing devices, e.g., a combination of a DSP and a microprocessor, a plurality of microprocessors, one or more microprocessors in conjunction with a DSP core, or any other such configuration.

The processor 210 can be coupled, via one or more buses, to read information from or write information to memory 220. The processor may additionally, or in the alternative, contain memory, such as processor registers. The memory 220 can include processor cache, including a multi-level hierarchical cache in which different levels have different capacities and access speeds. The memory 220 can also include random access memory (RAM), other volatile storage devices, or non-volatile storage devices. The storage can include hard drives, optical discs, such as compact discs (CDs) or digital video discs (DVDs), flash memory, floppy discs, magnetic tape, and Zip drives.

The processor 210 also may be coupled to an input device 230 and an output device 240 for, respectively, receiving input from and providing output to a user of the computer 102a.

Suitable input devices include, but are not limited to, a keyboard, buttons, keys, switches, a pointing device, a mouse, a joystick, a remote control, an infrared detector, a bar code reader, a scanner, a video camera (possibly coupled with video processing software to, e.g., detect hand gestures or facial gestures), a motion detector, or a microphone (possibly coupled to audio processing software to, e.g., detect voice commands). Suitable output devices include, but are not limited to, visual output devices, including displays and printers, audio output devices, including speakers, headphones, earphones, and alarms, additive manufacturing devices, and haptic output devices.

The processor 210 further may be coupled to a network interface card 260. The network interface card 260 prepares data generated by the processor 210 for transmission via a network according to one or more data transmission protocols. The network interface card 260 also decodes data received via a network according to one or more data transmission protocols. The network interface card 260 can include a transmitter, receiver, or both. In other embodiments, the transmitter and receiver can be two separate components. The network interface card 260, can be embodied as a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein.

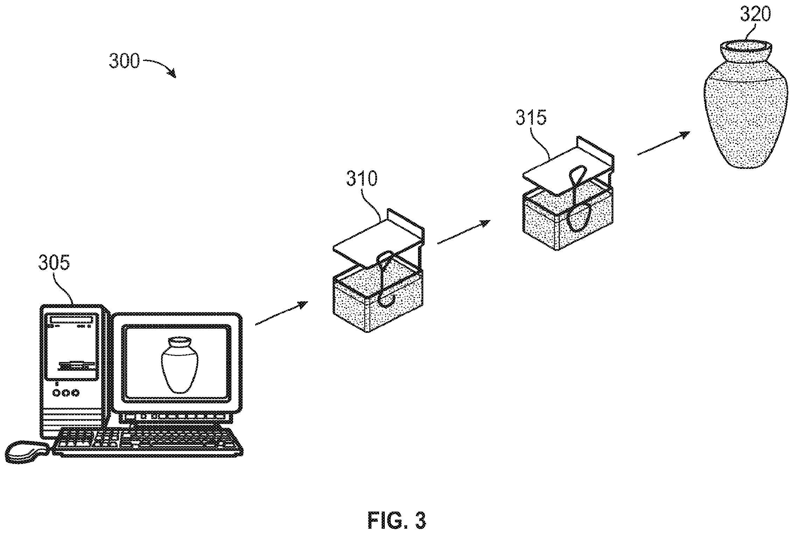

Figure 3 illustrates a process 300 for manufacturing a 3-D object or device. As shown, at a step 305, a digital representation of the object is designed using a computer, such as the computer 102a. For example, 2-D or 3-D data may be input to the computer 102a for aiding in designing the digital representation of the 3-D object. Continuing at a step 310, information is sent from the computer 102a to an additive manufacturing device, such as additive manufacturing device 106, and the device 106 commences the manufacturing process in accordance with the received information. At a step 315, the additive manufacturing device 106 continues manufacturing the 3-D object using suitable materials, such as a liquid resin.

These suitable materials may include, but are not limited to a photopolymer resin, polyurethane, methyl methacrylate-acrylonitrile-butadiene-styrene copolymer, resorbable materials such as polymer-ceramic composites, etc. Examples of commercially available materials are: DSM Somos^{®} series of materials 7100, 8100, 9100, 9420, 10100, 11100, 12110, 14120 and 15100 from DSM Somos; ABSplus-P430, ABSi, ABS-ESD7, ABS-M30, ABS-M30i, PC-ABS, PC ISO, PC, ULTEM 9085, PPSF and PPSU materials from Stratasys; Accura Plastic, DuraForm, CastForm, Laserform and VisiJet line of materials from 3-Systems; the PA line of materials, PrimeCast and PrimePart materials and Alumide and CarbonMide from EOS GmbH. The VisiJet line of materials from 3-Systems may include Visijet Flex, Visijet Tough, Visijet Clear, Visijet HiTemp, Visijet e-stone, Visijet Black, Visijet Jewel, Visijet FTI, etc. Examples of other materials may include Objet materials, such as Objet Fullcure, Objet Veroclear, Objet Digital Materials, Objet Duruswhite, Objet Tangoblack, Objet Tangoplus, Objet Tangoblackplus, etc. Another example of materials may include materials from the Renshape 5000 and 7800 series. Further, at a step 320, the 3-D object is generated.

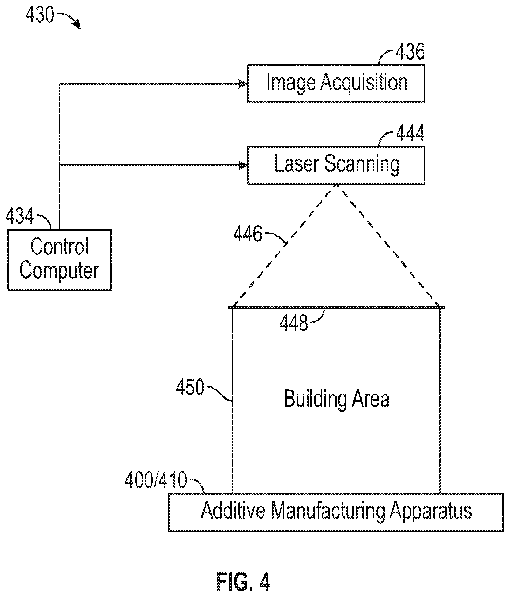

FIG. 4 illustrates an exemplary additive manufacturing apparatus 400 for generating a three-dimensional (3-D) object. In this example, the additive manufacturing apparatus 400 is a laser sintering device. The laser sintering device 400 may be used to generate one or more 3D objects layer by layer. The laser sintering device 400, for example, may utilize a powder (e.g., metal, polymer, etc.), to build an object a layer at a time as part of a build process.

Successive powder layers are spread on top of each other using, for example, a recoating mechanism (e.g., a recoater blade, drum, or roller). The recoating mechanism deposits powder for a layer as it moves across the build area, for example in the direction shown, or in the opposite direction if the recoating mechanism is starting from the other side of the build area, such as for another layer of the build. After deposition, a computer-controlled CO₂ laser beam scans the surface and selectively binds together the powder particles of the corresponding cross section of the product. In some embodiments, the laser scanning device is an X-Y moveable infrared laser source. As such, the laser source can be moved along an X axis and along a Y axis in order to direct its beam to a specific location of the top most layer of powder. Alternatively, in some embodiments, the laser scanning device may comprise a laser scanner which receives a laser beam from a stationary laser source, and deflects it over moveable mirrors to direct the beam to a specified location in the working area of the device. During laser exposure, the powder temperature rises above the material (e.g., glass, polymer, metal) transition point after which adjacent particles flow together to create the 3D object. The device 400 may also optionally include a radiation heater (e.g., an infrared lamp) and/or atmosphere control device. The radiation heater may be used to preheat the powder between the recoating of a new powder layer and the scanning of that layer. In some embodiments, the radiation heater may be omitted. The atmosphere control device may be used throughout the process to avoid undesired scenarios such as, for example, powder oxidation.

The control computer 434 may be configured to control operations of the additive manufacturing apparatus 400. In some embodiments, the control computer may be one or more computers 102 from Figure 2 or the computer 305 from Figure 3. In some embodiments, the control computer 434 may be a controller built into or configured to interface with the additive manufacturing apparatus 400.

Various embodiments disclosed herein provide for the use of a computer control system. A skilled artisan will readily appreciate that these embodiments may be implemented using numerous different types of computing devices, including both general purpose and/or special purpose computing system environments or configurations.

Examples of well-known computing systems, environments, and/or configurations that may be suitable for use in connection with the embodiments set forth above may include, but are not limited to, personal computers, server computers, hand-held or laptop devices, multiprocessor systems, microprocessor-based systems, programmable consumer electronics, network PCs, minicomputers, mainframe computers, distributed computing environments that include any of the above systems or devices, and the like. These devices may include stored instructions, which, when executed by a microprocessor in the computing device, cause the computer device to perform specified actions to carry out the instructions. As used herein, instructions refer to computer-implemented steps for processing information in the system. Instructions can be implemented in software, firmware or hardware and include any type of programmed step undertaken by components of the system.

A microprocessor may be any conventional general purpose single- or multichip microprocessor such as a Pentium^{®} processor, a Pentium^{®} Pro processor, a 8051 processor, a MIPS^{®} processor, a Power PC^{®} processor, or an Alpha^{®} processor. In addition, the microprocessor may be any conventional special purpose microprocessor such as a digital signal processor or a graphics processor. The microprocessor typically has conventional address lines, conventional data lines, and one or more conventional control lines.

Aspects and embodiments of disclosed herein may be implemented as a method, apparatus or article of manufacture using standard programming or engineering techniques to produce software, firmware, hardware, or any combination thereof. The term "article of manufacture" as used herein refers to code or logic implemented in hardware or nontransitory computer readable media such as optical storage devices, and volatile or non-volatile memory devices or transitory computer readable media such as signals, carrier waves, etc. Such hardware may include, but is not limited to, field programmable gate arrays (FPGAs), application-specific integrated circuits (ASICs), complex programmable logic devices (CPLDs), programmable logic arrays (PLAs), microprocessors, or other similar processing devices.

The control computer 434 may be connected to a laser scanning device 444. The laser scanning device may include movable mirrors which can direct the laser beam received from a laser source into the building area. The laser source may also be a movable laser source, or it may also be the laser scanner provided in a stereolithography device 400. The control computer 434 may further include software which controls the movement and functionality of the laser scanning system 444. As such, the control computer 434 may be configured to control the moment and activation of the laser scanning device.

The control computer 434 may further be configured to interface with an image acquisition assembly 436, such as to receive datalimages from the image acquisition assembly 436. The control computer 434 may further be configured to process the datalimages to determine if errors have or will occur in the build process as described herein. The control computer 434 may further be configured to control when and how the image acquisition assembly 436 captures images.

The image acquisition assembly 436 may be configured to attach to, be integrated with, and/or sit separate from the additive manufacturing apparatus 400 and placed in such a position to monitor the building area 450 and/or the build surface. Further, the image acquisition assembly 436 may be configured to be stationary, or moveable (such as based on control signals received from the control computer 434) to monitor the building area 450 from different angles.

The image acquisition assembly 436 may be configured to acquire images of a calibration plate 448 or a build surface. More particularly, the image acquisition assembly 436 may be configured to acquire images of laser spots and/or other markings made on the calibration plate 448 or build surface by the scanning system 444.

The image acquisition assembly 436 may include a camera, for example, an optical camera. The camera may be a commercial off-the-shelf ("COTS") digital camera having sufficient resolution to capture spots and other markings on the calibration plate 448 or build surface in sufficient detail to calibrate the scanning device. In some embodiments, the image acquisition assembly 436 is selected from an optical camera, a thermal imaging device, an IR camera, an ultraviolet (UV) camera, or a sensor that transfers other signals to visual signals.

The image acquisition assembly 436 may take the form of a special purpose camera or imaging device which is configured to capture spots reflecting from the surface of the calibration plate. In order to capture spots on the calibration plate, it may be necessary to position the image acquisition assembly 436 so that it points to the area near the spot created by a scanner in the scanning system 444. Accordingly, the image acquisition assembly 436 may also include a mount. In some embodiments, the mount may be a tilt-pan mount, which provides a range of motion sufficient to capture images in various locations on the calibration plate 448. The mount may be driven by a motor. The motor may be configured to receive control signals from the control computer 434 which provide instructions for the movement of the image acquisition assembly 436. In some embodiments, in addition to having a tilt-pan range of motion, the image acquisition assembly 436 may be further mounted on a projecting arm of a crane, commonly referred to as a jib. The jib may provide a further range of motion by allowing the image acquisition assembly 436 not only to tilt and pan, but also to physically move its location in order to better acquire images of spots and/or markings on the calibration plate 448 or build surface.

### Calibration of an image acquisition system

All image acquisition assemblies have inherent distortion, either due to optical distortion resulting from lens errors which deform the shapes of lines and/or due to perspective distortion resulting from the position of the image acquisition assembly in relation to the calibration plate or build surface. For example, a camera in an additive manufacturing device may not be positioned in a direct vertical line above all reference markings. Instead, some reference markings may appear distorted, such as circular spots that appear ellipsoidal in the image. Further, some reference markings may appear closer to the camera than other reference markings. Thus, one or more objects in an image may have apparent (also "observed" or "detected") characteristics in the image that do not correspond to the true size, shape, or position of the objects in real life. The methods and systems disclosed herein are designed to account for this distortion.

In some embodiments, a computer control system, such as control computer 434, is configured to obtain position information such as x and y coordinates (also "position coordinates") for reference markings as they appear in a digital image, and compare these observed coordinate positions with true coordinates of the reference markings. Based on the differences between observed and true coordinates, the computer control system may compute an error function for the distortions resulting from the image acquisition assembly, such as image acquisition assembly 436. The error function may be stored in the computer control system or on a network, and may be used to correct distortions and determine true coordinate positions for features in any other images acquired by the same image acquisition assembly.

The control computer 434 may begin the process with a reference image acquired from the image acquisition assembly 436. In some embodiments, a reference image is a digital image of reference markings, for example, reference markings that may be on a first surface of a calibration plate, such as calibration plate 448. The reference image may be may be acquired using the image acquisition assembly 436 located in a reference position. The reference position may be a fixed position in or around the additive manufacturing device, such as additive manufacturing apparatus 400. From this reference position, which is fixed relative to the build surface, the image acquisition assembly 436 may not be moved. If the image acquisition assembly 436 is repositioned in relation to the build surface, a new reference image should be acquired. However, in contrast to components of the scanning system, such as scanning system 444, the image acquisition assembly 436 is infrequently repositioned, especially if the assembly is built into the additive manufacturing device 400. Thus, the image acquisition assembly 436 in a reference position may provide a single reference view from which all subsequent images may be obtained.

On the calibration plate 448, each reference marking may have a known position at a known, predefined set of x and y position coordinates. Exemplary reference markings may comprise an ordered pattern of objects such as spots. In some embodiments, the ordered pattern is a grid pattern. For example, the reference markings may be a pattern of crosses, x's, lines, or spots in a grid pattern. Spots may be configured in a non-uniform array. A spot may have any geometric shape, such as a circle, square, ellipse, etc, for example, and a reference position may be derived from the shape. In general, any shape for which a geometrical function is known or can be calculated may be used as a reference marking. For example, a reference marking may be a shape whose gravitational center within a circumference is known or can be calculated. Reference markings may comprise outlines of shapes, such as a hollow circle, or other closed-loop shapes. Reference markings may comprise convex surfaces and/or closed contours. Reference markings may comprise a sufficient number of points to create an approximation of position.

In certain embodiments, each spot may be a circle, i.e., a round plane figure whose boundary (the circumference) consists of points equidistant from a fixed point. Circles may have higher resolution than other geometric shapes, because the true position coordinates may be more easily determined in an imaged circle than in images of other shapes. Even if the imaged circle appears ellipsoidal due the distortion, the edges of the imaged circle may still be matched to the edges of the reference circle, and the center point of the imaged circle may still be defined relative to these edges.

In some embodiments, the spots in the pattern on the calibration plate 448 are all uniform in size and shape. In certain embodiments, the spots are non-uniform in size and/or shape. The grid pattern may comprise at least *n₁* spots in a first direction and *n₂* spots in a second direction (to form an *n₁* × *n₂* grid), where *n₁* and *n₂* may be the same number or may be different numbers. In some embodiments, the grid pattern comprise at least 3 x 3 spots. The size of the grid pattern may depend on the size of the calibration plate 448 or build surface in the additive manufacturing device 400. In general, the grid pattern may comprise a sufficient number of spots to provide enough data points to measure, while each spot may comprise a surface area with a sufficient number of pixels to detect. For example, a grid pattern may have at least 3 x 3 spots, and the surface area of each spot may comprise at least 20 pixels.

In some embodiments, reference markings are non-uniform in at least one of size, shape, and distribution. For example, the reference markings may be randomly placed on the calibration plate, or may form a recognizable pattern. The pattern may be asymmetrical, or may comprise individual markings that are not uniformly distributed on the calibration plate. In general, the accurate known location of each reference marking may be known, but the configuration of the reference markings in relation to one another may be uniform or non-uniform, patterned or not.

Reference markings may be printed or etched accurately on the first surface of the calibration plate 448. In some embodiments, the calibration plate 448 is a rigid plate, a film, or a paper. In certain embodiments, the calibration plate 448 may be a calibration surface, such as the surface of the raw material from which the part will be built. Reference markings like raster scans may be projected on a build surface and imaged. The contrast between reference markings and the calibration plate 448 may be detected by the image acquisition device 436, or may be detectable in images taken by the image acquisition device 436. Milled plates or ink printed plates may be used. In certain aspects, accurate placement of the reference markings is important, so that the intended position and actual position of the reference markings is close. In certain aspects, the tolerances should be within a range of at most ±500 µm, and tolerances within a range of ±100 µm or less may also be used, like ±50 µm, ±10 µm, ±5 µm, or ±1 µm.

The calibration plate 448 may comprise a material that changes the wavelength of the light that falls on it. For example, the material may absorb one or more photons at one wavelength and emit one or more photons at a different wavelength. In this manner, UV or infrared (IR) radiation may be converted to light in a different spectrum, or many other conversions to higher or lower wavelengths may be used. Visible light may be detected by a camera that is sensitive to the visual spectrum, or IR radiation may be detected by an IR camera. Exemplary materials used in the calibration plate may be ceramics, inks, phosphors, fluorescent materials, and may be organic or inorganic. In some embodiments, materials that convert the wavelength of light may be present on a calibration plate, paper, film, or other substrate. In some embodiments, where electron beams are used, effects of the electrons on a material in the calibration plate may detected, for example, heat or light may be emitted where the electron beam contacts the material of the calibration plate, paper, film, etc.

In some embodiments, a calibration plate 448 may have a flat surface. In certain embodiments, a calibration plate 448 may have a surface that is the same shape as objects to be built. For example, when a curved object is built by a scanning system 444 directing a scanner beam onto a curved surface, then the calibration plate 448 may have a curved surface.

In general, the calibration plate 448 may be placed in the additive manufacturing device 400 in precisely the same spatial location or position where the scanner beam will be directed when an object is built. In some embodiments, the calibration plate 448 may be positioned parallel to a scanning area of the scanning system 444. In some embodiments, the reference markings may be in same xy plane as the build surface (also "build plane"), i.e., the surface of powder or resin or other build material that either has been or will be exposed to the scanner beam. Accordingly, the calibration plate 448 may be positioned in the same xy plane as the build surface, in order to ensure that the reference markings on the first surface of the calibration plate are also positioned in this plane. In certain embodiments, the reference markings may be parallel to the build surface but not positioned in the same xy plane as the build surface.

The control computer 434 may be configured to acquire and/or store a reference image, as well as parameters and/or functions relating to the correction of distortions in the reference image. Data or functions relating to the correction may be stored as metadata. Acquiring a reference image may comprise acquiring a digital image of the reference markings on the calibration plate 448. The control computer 434 may be configured to process the reference image using image processing steps, such as selecting a region of interest in the reference image; identifying features in the region of interest, wherein the features comprise a selection of reference markings in the reference image; and obtaining an error function for positions of the features in the region.

The control computer 434 may direct the image acquisition assembly 436 to acquire the reference image. The control computer 434 may discretize the reference image into a plurality of pixels. In some embodiments, the image acquisition assembly 436 is directed to acquire a series of reference images and the control computer 434 generates an average representation of features from the series. Averaging features from a series of images may reduce random noise occurring in single images.

In some embodiments, the control computer 434 is configured for processing reference images using image processing steps. Image processing may comprise detecting features, calculating center coordinates of the features, and determining position of the features. In some embodiments, a region of interest (ROI) may be selected in the reference image, for example, by a user or by the control computer 434configured to recognize an ROI. The ROI may comprise the entire reference image, or may comprise a subset of the reference image. For example, the reference image may comprise the entire calibration plate 448 plus additional surface area outside of the calibration plate 448. In this case, the ROI may comprise only the calibration plate 448. In some embodiments, an image may have additional markings added in order to aid in orienting the reference markings. The control computer 434 may be configured to differentiate these additional markings from the original reference markings, for example, by detecting only features comprising reference markings. The control computer 434 may be configured to detect features within the ROI. A feature may be a reference marking, such as a circular spot, or a part thereof. The control computer 434 may be configured to differentiate features from noise or non-specific pixels appearing in the digital image.

In an exemplary method, the control computer 434 detects features by creating a binary mask for pixels in the ROI. The binary mask may be based on a threshold of pixel intensity, so that all pixels below a given threshold are represented by 0, while all pixels at or above a given threshold are represented by 1. The control computer 434 may use filtering methods to isolate areas of pixels designated by 1, for example, areas where a minimum number of pixels designated by 1 are located. Filtering methods may be configured to account for non-uniform lighting or other irregularities in the pixel distribution of reference markings. In addition, after binary clusters are detected, other filtering methods may be used, for example, to select binary clusters of pixels on the basis of area, circularity, circumference, geometric shape, and more.

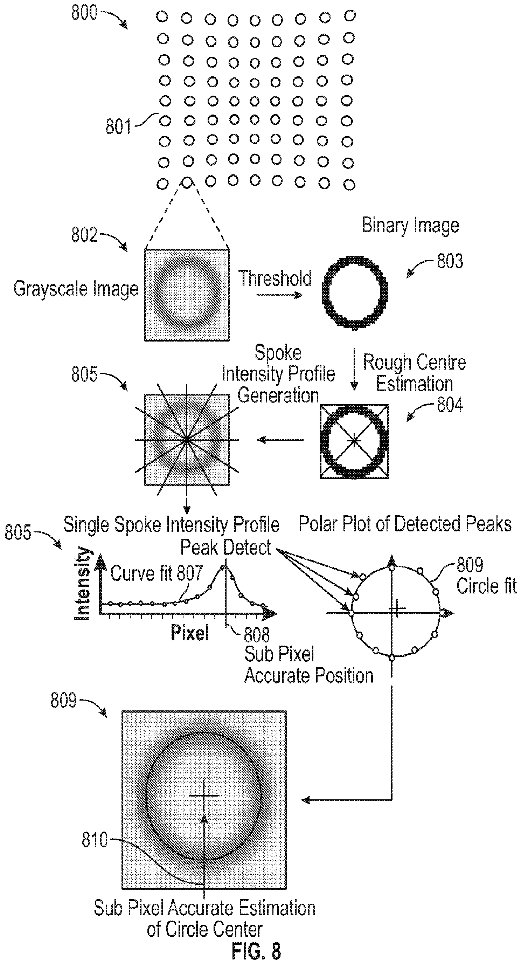

After obtaining the filtered binary representation of the detected features, the control computer 434 may be configured to determine the coordinate positions of the center of a feature (also "center coordinates"). Figure 8 illustrates steps of an exemplary method by which center coordinates of a circular spot are detected. In a ROI (800), features that have the shape of a hollow sphere (801) may be detected. The computer control system may start from a raw greyscale image of a sphere (802) and use a binary mask to create a binary image of the sphere (803). The computer control system may set a rough center estimation (represented by a cross sign, 804). In the grayscale image, the computer control system generates spokes (805), or lines radiating outwards from the rough center estimation (804). Pixel intensity along these lines may be projected on a graph (i.e., the single spoke intensity profile (805)), and a curve may be fitted to the points on the graph (807). The computer control system may detect a peak in intensity in graph 807 at a position (subpixel accurate position (808) in the single spoke intensity profile 805). The computer control system may plot each peak in a polar plot, representing the angles of the spokes and the subpixel accurate position (808) where the peak intensity was observed. A circle may be fitted to the polar plot (circle fit (809)). The control computer 434 may detect in the circle fit (809) a new center, i.e., a subpixel accurate estimation of the circle's center (810). In certain embodiments, a reference marking is a solid sphere, and center coordinates may be detected using a similar method, wherein a single spoke intensity profile may show a sudden change in pixel intensity at a position corresponding to the edge of the circle, for example due to the sharp change in contrast between a black circle and white background, or vice versa.

The control computer 434 may use a surface fitting method in order to map the position coordinates of the detected features onto a reference grid and derive an error function. The reference grid may comprise true coordinate positions of reference markings, for example, the true coordinate positions of reference markings on the calibration plate 448 used to create the digital image. A user may input the reference grid into the control computer 434, or the control computer 434 may have access to the reference grid stored in memory or via a network. In some embodiments, the control computer 434 is configured to map center coordinates of detected features onto the reference grid, so that the center coordinates of detected features may be compared to the true coordinates on the reference grid. The control computer 434 may compute a deviation map comprising a surface fitting of deviation in the x and y position for all points in the entire ROI.

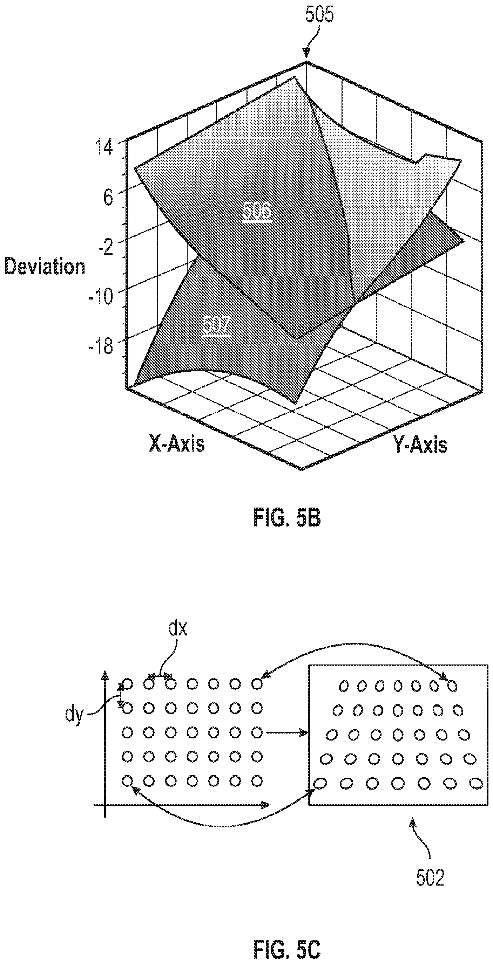

Figure 5B illustrates an exemplary surface fitting (505) in which deviation is plotted for each coordinate position in a region of interest. A first surface plot (506) shows the deviation in the x direction at each coordinate position. A second surface plot (507) shows deviation in the y direction at each coordinate position. Notably, the plot may cover the entire region of interest, as the control computer 434 computes deviation values for features and performs interpolation methods to derive deviation values for the positions in between the features.

In some embodiments, the control computer 434 may compute an error function that indicates the deviation at any given coordinate position in the reference image. In some embodiments, the error function may model the deviation between the observed position coordinates in an image and the true position coordinates. The error function may be a representation of deviation at position coordinates. The error function may be a mathematical model approximating the deviation at position coordinates. The control computer 434 may store deviation data and/or an error function together with a reference image, for example, a reference image may be stored with a meta-data representation of the deviation data. Data may be stored in a coordinate table. The coordinate table may indicate the expected or likely deviation at any position coordinates in a reference image. In some embodiments, the coordinate table may comprise measured deviation values as well as estimated deviation values computed by interpolation. Accordingly, for any digital image subsequently acquired with the image acquisition assembly 436, the control computer 434 may determine the deviation in coordinate position of a feature in the digital image.

In some embodiments, the control computer 434 may determine an error function by computing a surface fit wherein the deviations from the true position coordinates may be determined for each pixel of the features in the ROI. The control computer 434 computes an error function from the surface fit in order to model the differences between the coordinates in the ROI and the known, predefined coordinates. In some embodiments, error functions may be derived from comparisons and/or correlations of actual and observed positions. In general, an error function explains the mathematical relationship between data in the actual field and observed field. Values may be stored in a lookup table. Values may be used with interpolation techniques to determine intermediate values lying in between measured or observed values. Exemplary interpolation techniques include liner or bilinear interpolation and bicubic interpolation.

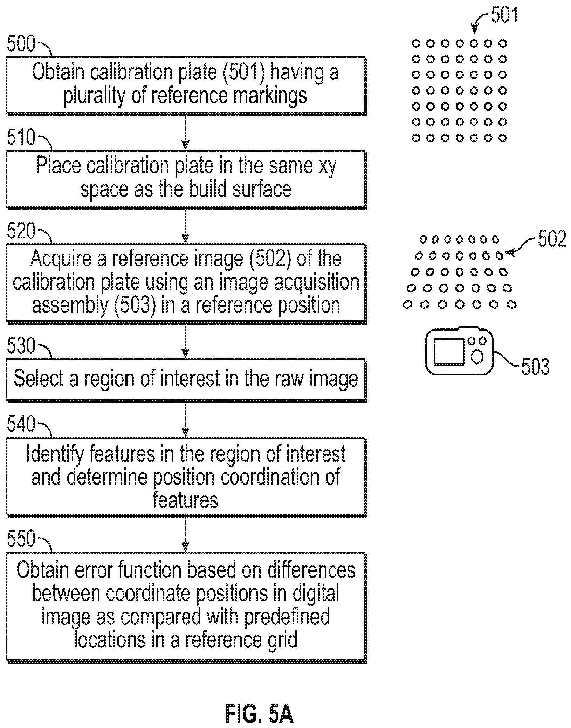

Figure 5A illustrates an exemplary process 500 by which a computer control system, such as control computer 434, may acquire a digital image and compute an error function. First, a calibration plate (501) having a plurality of reference markings on its first surface may be obtained. The reference markings are circular spots in this example. The calibration plate may be placed in the additive manufacturing device in the same xy space (i.e., the same xy plane) as the build surface (510). A digital image (502) of the reference markings on the calibration plate is acquired (520), using an image acquisition assembly (503) which may be fixedly positioned in a reference position. In the digital image (502), the distortion is visible. In step 530, a region of interest may be selected in the digital image. In step 540, the computer control system may identify features in the region of interest, and the coordinates and positions of these features may be computed. In step 550, the computer control system obtains an error function based on differences between coordinate positions in digital image as compared with predefined locations in a reference grid. An exemplary transformation of coordinate position in a reference image (502) is illustrated in Figure 5C, wherein the error function may be used to correct the deviation observed in the digital image and compute true coordinate positions for the reference markings.

Once the error function corresponding to images from a specific image acquisition assembly has been determined, the error function may be applied to any digital image that is subsequently acquired by the same image acquisition assembly. The error function may be used to transform a detected coordinate position in the image to true position coordinates.

### Calibration of the scanning system

Methods and systems described herein are suitable for calibration of any scanning system or scanning energy source, such as scanning system 444, including but not limited to laser scanning systems. Systems for directing electron beams in electron beam melting may also be calibrated according to the present disclosure, as well as any system in which light, heat, chemicals, or energy are projected, jetted, or directed using motor-driven mechanisms. Any of these systems are subject to errors that cause differences between the intended or predefined location of the scanning and the actual location. Such errors may result from misalignment of components in the scanning system, delays in moving motors like step motors or galvanometer motors, distortion from optics, mechanical inefficiencies, temperature-induced changes, and more. In general, errors are unique to an individual scanning system, and also specific to the configuration or alignment of the components in the scanning system at any given point in time.

The present disclosure relates to methods and systems for calibrating a scanning system, comprising steps of measuring errors between actual and expected scan positions, determining scanner corrections, and accounting for the scanner corrections when setting directions for scanning. The methods and systems may use only a scan image and error function to obtain the scanner corrections, which enables fast and efficient calibration that may be performed at any time that scan images are obtained, for example, before, during, or after a build.

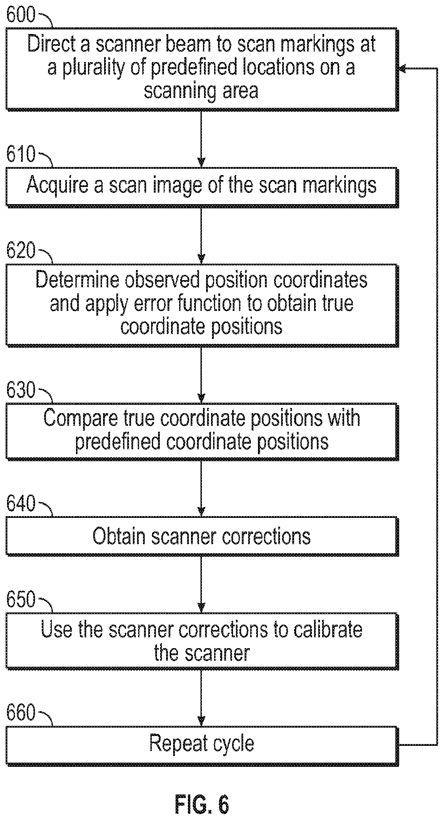

Figure 6 illustrates an exemplary calibration method performed by a computer control system, such as control computer 434. In some embodiments of the present disclosure, a computer control system calibrates a scanning system such as a scanning system 444, using a method comprising directing a scanner beam from a scanning system to scan markings at a plurality of predefined locations on a scanning area such as a build surface (600); acquiring, using an image acquisition assembly, such as image acquisition assembly 436, in a reference position, a scan image of the scan markings (610); determining observed position coordinates of the scan markings in the scan image and applying an error function computed for any images acquired by the image acquisition assembly (630); obtaining scanner corrections by comparing true coordinate positions of scan markings with predefined coordinate positions (640); and correcting the scanning system using the scanner corrections (650). In some embodiments, the method further comprises reiterative cycles of scanning using the scanner corrections (660).

The scan image may be a digital image of scan markings, obtained by the same image acquisition assembly located in the same reference position as used to determine the error function. In addition, the error function used to calibrate the scanning system may be the same error function computed from the digital images of reference markings on a calibration plate, as this error function may be used for determining deviation and true positions of features in any digital images subsequently acquired from the same image acquisition assembly. The error function may be stored in the computer control system or may be available over a network.

In some embodiments, the calibration plate may be moved from the path of the image acquisition assembly before directing the scanner beam, so that the calibration plate is no longer in the scanning area when the scan markings are made. The scanning area may comprise a build surface, for example, the entire build surface on which a layer will be built. The scan markings may be made on the build surface. Alternatively, the scan markings may be made on a plate, film, or paper that mimics the build surface, for example, a flat surface located in the same xy plane as the build surface. The contrast between the scan markings and build surface or other flat surface may be sufficient to be detected in a scan image. Scan markings may be made at a plurality of predefined locations, and may be an ordered or non-ordered pattern such as a grid or pattern of spots, lines, or crosses.

The present methods and systems provide flexibility as to when a scan image may be acquired and when the scanning system may be calibrated. In some embodiments, the computer control system may be configured to acquire a scan image before scanning of a single layer in a build, before scanning any layer of the build, or during scanning of a layer. In some embodiments, the computer control system may be configured to acquire a scan image in the same layer that an object is being built, and when some but not all of the layer of the object has been built. Or, the scan image may be acquired after all the layer of the object has been built. Scan markings may be made on a build surface. Scan markings may correspond to actual portions of a scanned part. Scan markings may be made on an area of the build surface that is outside of where a part is scanned. In some embodiments, scan markings may be made on powder where the part is not built. Scan markings may be made outside of the powder area but on a surface in the same plane as the powder surface. Such an area may be a border region where the scanning system has a field of view, but which is not part of the powder surface. The area may comprise a radiation sensitive material that converts energy from the laser or other energy source in the system to a detectable wavelength and makes a detectable scan marking. Alternatively, a different wavelength laser or energy source, such as a pilot laser, may be used to project scan markings onto the area, where it may be imaged and used as actual scan markings in subsequent calculations.

The scan image may comprise a single image, or the scan image may comprise a stack of images. A stack of images may collectively comprise the scan markings for a single layer of an additive manufacturing build, for example, if each individual image corresponds to a portion or subset of all scan markings in the single layer. Alternatively, the stack of images may collectively comprise scan markings for a plurality of layers in an additive manufacturing build. For example, a stack of images may comprise scan markings for all layers in an additive manufacturing build.

In some embodiments, the computer control system is configured to cause a laser scanning system to apply scan markings with a pilot laser. An exemplary pilot laser is an extra laser (typically emitting light in the visible spectrum) that may be positioned beside the main laser and directly after the main laser exit. For example, where a CO₂ laser may be the main laser or energy source for laser sintering devices, a pilot laser may be aligned along the same axis as the CO₂ laser, while using different optical elements. Pilot lasers may be used to show where the main laser beam will be located, which is useful in those cases where the main laser emits light at a wavelength outside of the visible spectrum. Thus, a scan image may comprise a digital image of scan markings made by a pilot laser.

In a next step, the computer control system determines true position coordinates of the scan markings. Although the scanning beam was directed to predefined coordinates during the build, the true position of the scan markings may reflect errors in the scanning system, and may be positioned at a distance from the predefined coordinates. Starting from the scan image of the scan markings, the computer control system identifies and/or computes features, center coordinates of the features, and position of the features in the scan image.

The computer control system may use image processing steps for the scan image that are similar or identical to image processing steps performed on the reference image. For example, the scan image may be discretized into a plurality of pixels, and the computer control system may detect features, calculate center coordinates of the features, and determine positions of the features. A region of interest (ROI) may be selected in the scan image, and the computer control system may be configured to identify features in the ROI. Features may be scan markings in a pattern selected for calibration, such as circular spots, or may correspond to features in an object that is being built. The computer control system may differentiate features from noise or non-specific pixels appearing in the scan image. The ROI may comprise the entire scan image, or may comprise a subset of pixels in the scan image.

In an exemplary method, the computer control system identifies detected features by creating a binary mask for pixels in the ROI. After obtaining the filtered binary representation of the detected features, the computer control system may be configured to determine the coordinate positions of the center of a feature (i.e., center coordinates).

These center coordinates and any other coordinate positions of the detected features comprise detected or observed position coordinates in the scan image. Because the scan image may appear distorted, like any image acquired from an image acquisition assembly, the computer control system may then apply a suitable error function to transfer the observed position coordinates of features in the scan image into true or actual position coordinates. A suitable error function may be the error function obtained using a reference image acquired by the same image acquisition assembly as the scan image, according to methods described herein. The computer control system may then compute the true position coordinates of the features in the scan image.

In a next step, the computer control system compares the true position coordinates of features in the scan image with the predefined, expected position coordinates to which a scanner beam was directed. The computer control system may create a deviation map, using similar or identical surface fitting methods to those used to determine an error function for the reference image. For example, the true coordinate positions of features in the scan image may be mapped on a grid of predefined coordinate positions. In some embodiments, error functions may be derived from comparisons and/or correlations of actual and observed positions. In general, an error function explains the mathematical relationship between data in the actual field and observed field. Values may be stored in a lookup table. Error functions may be calculated, for example, using interpolations such as bilinear or bicubic interpolations, or NURBS surfaces to interpolate between 2 points. Bilinear interpolations may be used.

In some embodiments, the computer control system may map the true coordinate positions onto a grid comprising predefined coordinate positions of the same scan markings. In some embodiments, the computer control system may compute a different grid of predefined coordinates, for example, a master grid. The master grid may comprise extrapolated coordinates outside of the area of scan markings, for example, areas where scan markings may not be present, but the computer control system may compute likely position coordinates. In some embodiments, the extrapolated coordinate points in the master grid may comprise points in an area larger than the area covered by the scan markings. In some embodiments, the master grid may comprise a representation of predefined coordinates that may serve as a reference for any new grids, so that coordinate positions of new grids may be used for old scan images. The computer control system may create a master grid based on scan field limits and a set number of cells. The borders of cells may comprise the predefined position coordinates in the master grid.

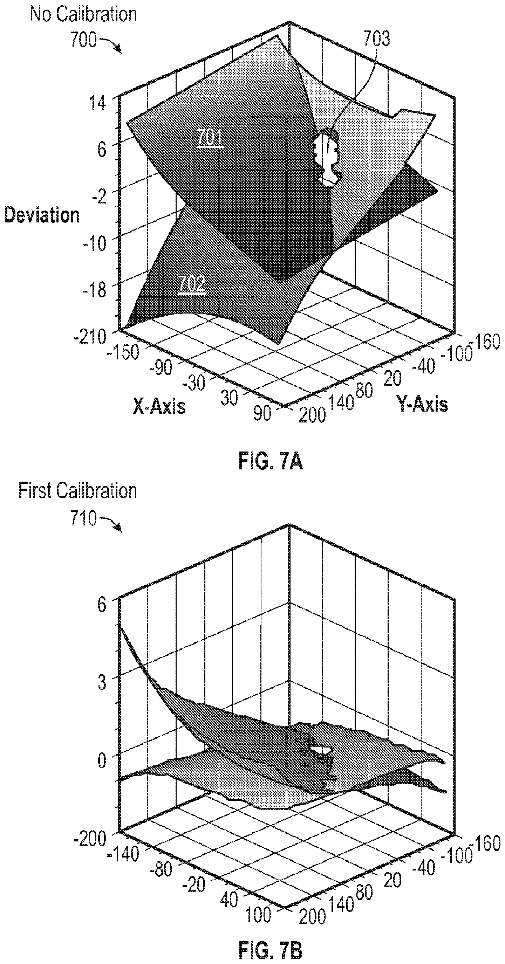

Figures 7A-7E illustrate exemplary deviation maps in which deviation of actual coordinate position from expected coordinate position is plotted on the z-axis for each point in a region of interest. In Fig. 7A, a deviation map has a first surface plot (701) showing the deviation in the x direction at each coordinate position, and a second surface plot (702) showing the deviation in the y direction at each coordinate position. In this example, there is also a hole (703), where the computer control system may have filtered out a feature in the digital image, or where the computer control system may not have been able to reliably determine the center coordinates of the features. No deviation may be plotted for these coordinate positions. However, the computer control system may interpolate from neighboring deviation data in order to determine the most likely deviation at coordinate positions inside the hole.

Fig. 7A shows the deviation map when the scanning system has not been calibrated, i.e., before the computer control system has obtained scanner corrections and used these to direct the scanner beam to new corrective coordinates. In some embodiments, the computer control system may compute scanner corrections and new calibrated coordinate positions which may be sent to the scanning system. For linear errors, exemplary scanner corrections may be equal and opposite to deviation values at a coordinate position. Calibrated coordinate positons may be the new set of coordinates for the scanner beam, which may account for deviation and may be used to direct a scanner beam so that it lands on the expected position.

For all coordinate positions in the scanning area, the computer control system may store in a coordinate table the true coordinate positions where the scanner beam lands, deviation values, scanner corrections, and/or adjusted (or calibrated) coordinate positions where the scanner beam will be directed in order to account for deviation. Table 1 is a sample line from an exemplary coordinate table. In some embodiments, the deviation is non-linear, and the computer control system may compute other scanner corrections.

**Table 1 - sample line from a coordinate table**

| Coordinate position in the scanning area (x,y) | True coordinate position reached by scanning beam (x,y) | Deviation values (x,y) in mm | Scanner corrections (x,y) in mm | Calibrated coordinate position (x,y) |
|---|---|---|---|---|
| (0,1) | (0.01, 0.98) | (+0.01, -0.02) | (-0.01, +0.02) | (0.99, 1.02) |

In some embodiments, the computer control system stores deviation values, and automatically computes instructions for the scanning system to direct the scanner beam to new coordinate positions that compensate for the deviation values. These new coordinate positions may not be displayed or stored before scanning, although in some embodiments, the new coordinate positions may be reported in a system log when the additive manufacturing system reports position data of scanning system components during the build.

The computer control system may store the coordinate table in memory or may access the coordinate table via a network.

In some embodiments, the computer control device may calibrate the scanner to correct errors, and may then repeat the steps of scanning and generating a new deviation map. In some embodiments, more than 1 cycle of calibration may be required to adequately reduce deviation, so the computer control system may repeat cycles of calibration until deviation is no longer detectable on a deviation map. Results from each cycle of calibration may be compiled in the coordinate table, for example, to generate a single final scanner correction and/or set of calibrated coordinates that are sufficient to reduce deviation to non-detectable levels.

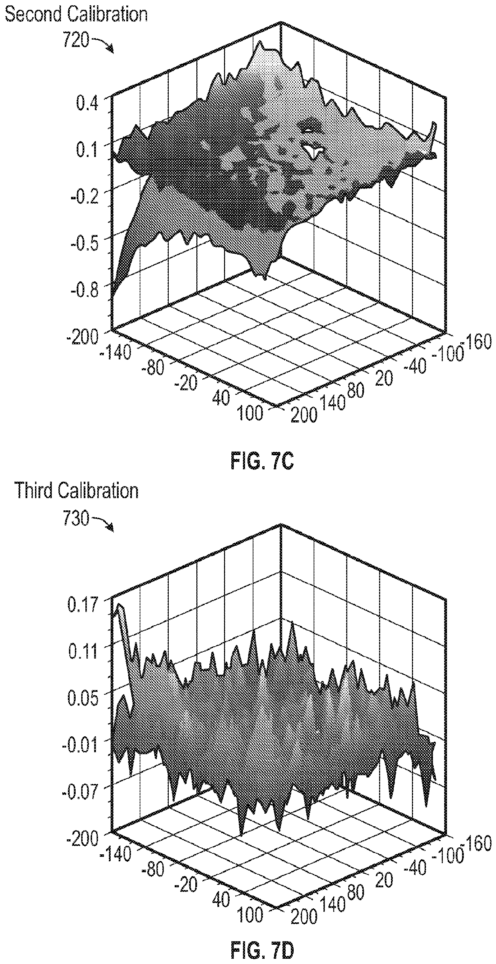

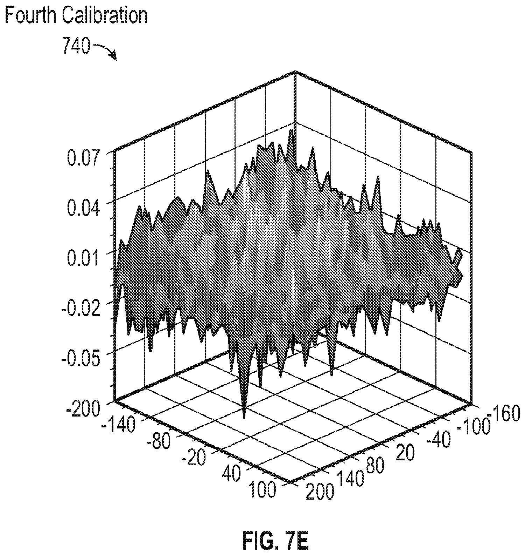

Figure 7B illustrates a deviation map created after a first calibration. Although the deviation values are lower after the first calibration, the deviation is still detectable. Figures 7C, 7D, and 7E illustrate deviation maps generated after a second, third, and fourth round of calibration. In this example, after the fourth round of calibration, the computer control system no longer detects deviation above a noise floor, and will not proceed with another cycle of calibration and deviation map analysis.

The final result of the calibration of a scanning system may be a set of final set of deviation values, scanner corrections and/or calibration coordinates for each position coordinate within a physical build area. Accordingly, for any position in the build area where a scanner beam from the scanning system may be directed, the computer control system may store a set of instructions for directing the scanner beam to calibrated coordinates that compensate for errors in the scanning system. In some embodiments, the computer control system stores the deviation values, scanner corrections, and/or calibration coordinates corresponding to each round of calibration, as well as the final set of data based on all rounds of calibration.

In some embodiments, methods performed by the computer control system may be used to calibrate a plurality of scanning systems within the same additive manufacturing device. Typically, when two or more scanning systems are present in an additive manufacturing device, each of the scanning systems has its own individual scanning area (or "scan field"), and the combination of these two or more scan fields creates a single large scan field. A scanning system may comprise a composite scanning system which comprises one or more scanning systems. The composite scanning system may have a single scan field (also called a "global scan field", or "single large scan field") comprising a composite of smaller scan fields (also called a "local scan field" or "individual scan field"). This enables efficient building of multiple objects or of large single objects. However, each scanning system may need to be individually calibrated in order to account for errors, and moreover, aligned relative to the other scanning system(s) in order to create the single scan field.

For example, in additive manufacturing device with four scanning systems, the single scan field may comprise four individual scan fields, each covering a different quadrant of the single scan field. Due to errors in a scanning system, an individual scan fields may be misaligned relative to the others, for example, offset in any direction or rotated. In some embodiments, the single global scan field may be planar and comprise multiple individual local scan fields that all lie in the same plane. In some embodiments, the single global scan field may be non-planar, so that the individual local scan fields are misaligned from one another along more than one plane.

In some embodiments, each of the individual scan fields may be calibrated separately and then aligned relative to each other. The computer control system may obtain a scan image of each individual scan field and apply an error function to correct for distortion in each scan image. The true positions of scan markings in each scan image may be determined, in accordance with the calibration steps for each individual scan field. In some embodiments, a local reference position in each scan field may be identified, such as the center coordinates (0,0) so that the individual scan fields may be oriented.

In order to correct for differences in relative offset and/or relative rotation between the individual scan fields, a global positioning may be used. For example, a single global view of all individual local scan fields may be imaged in order to determine the extent of offset and/or rotation of the local scan fields relative to the one another. In some embodiments, the single global view may be obtained from a single camera that is calibrated using the reference markings on a single calibration plate as described herein. Individual scan fields may be calibrated using, for example, a portion of the image of the single global view.

In some embodiments, the computer control system may use an error function obtained for the single scan field in order to determine position data and correction data for each individual scan field. This may enable the computer control system to simultaneously calibrate and align the individual scan fields, because any scanner corrections for each individual scan field may already be aligned relative to the same single scan field. The method performed by the computer control system may be similar to the method performed for a single scan field: first, the computer control system may acquire a single reference image covering the single scan field, and this single reference image may processed and used to determine an error function for all coordinate positions in the single reference image. Then, the computer control system may acquire scan images corresponding to the individual scan fields of each scanning system, process the scan images, and use the error function to determine true position coordinates for features in the scan images. The computer control system determines scanner corrections for each individual scanning system based on the difference between true position coordinates and expected coordinates. Because true positions coordinates for features in each individual scan field were determined using an error function for the single scan field, the scanner corrections have already incorporated position data for the single scan field. As a result, the scanner corrections may already incorporate deviations that may result when the individual scan fields are not aligned with respect to each other. By using this method, the computer control system may avoid further computation steps such as aligning individual scan fields that have been calibrated individually.

### Workflow

Using the disclosed methods and systems, a scanning system such as a laser scanning system may be calibrated at any time before, during, or after an additive manufacturing build. In principle, a scanning system could be calibrated only once, as long as the scanning system does not move from their position relative to the build surface, and as long as all conditions and components are the same after calibration. However, it is advantageous to calibrate more frequently, especially during a build or while building a single layer of an object. In some embodiments, the computer control system stores an error function that may be used on any scan images acquired during a build, and the computer control system may determine new scanner corrections during the build, or confirm that a set of scanner corrections are still suitable.

For example, during the course of building a layer of an object, the computer control system may direct the scanner beam to scan a set of scan markings intended for use in calibration. The computer control system may acquire a scan image of these scan markings and perform methods as described herein to obtain scanner corrections. In some embodiments, the computer control system may use as scan markings the one or more hatchings or vectors that correspond to the slice or layer of the object being built.

Scan markings may be areas of visible light, for example, where a pilot laser that emits light in the visible spectrum is directed at a build surface. Scan markings may be areas where a scanner beam has caused a physical change to the build material, so that the altered build material may be distinguished from build material that has not been exposed to the scanner beam. In laser melting (LM), scanned material in a molten form may be distinguished from unscanned material. In some embodiments, an image acquisition device may be a thermal imaging device or an IR camera.

The image acquisition assembly may acquire a stack of images representing portions of a layer or representing multiple layers. The stack of images may be acquired over time. For example, a pilot laser may be directed to a position on the build surface to make a scan marking, and a scan image of this scan marking may be acquired. Each time the pilot laser is directed to another position on the build surface, a scan image is acquired. Eventually, the stack of images collectively represent all scan markings made over time. For stereolithography (SLA), a stack of images may be acquired when the build surface is exposed to visible light.

In some embodiments, the disclosed methods and system may be used during the build of an object to determine if the scanned surfaces of the object are correctly positioned. The image acquisition assembly acquires a scan image of a feature of the object, and the computer control system compares the true coordinate positions of features with expected coordinate positions in order to determine if the true and expected coordinate positions match. Thus, the computer control system may perform a quality check of the obj ect.

A further aspect of the present disclosure relates to a method wherein flaws may be detected on objects, in particular, flaws resulting from errors in scanning. When scanning systems such as laser scanning systems do not apply the expected levels of energy or power to a region of the object, that region may have build material that is not sufficiently heated, melted, sintered, or cured. In the resulting object, this area may be structurally weak or may have a physical hole. In some embodiments, an image of an object or a stack of images is acquired during scanning, comprising all xy positions where the scanner beam has scanned. Specific xy positions where the scanner beam does not adequately scan may be detected in a scan image, for example, because these specific xy positions show unmelted build material. Accordingly, the computer control system may perform a quality check on objects, and may either indicate to a user of the additive manufacturing device that an error has occurred, or may implement remedial measures such as rescanning in order to correct the error.

## Claims

1. A computer-implemented method for calibrating a scanning system (444) in an additive manufacturing device, (400) the method comprising:
directing a scanner beam from the scanning system to apply scan markings at a plurality of predefined locations in a scanning area;
acquiring, using an image acquisition assembly (436, 503), a scan image comprising image scan markings corresponding to the scan markings (610) ;
determining scanner corrections based on position of the image scan markings and the predefined locations in the scanning area; and
calibrating the scanning system (444) using the scanner corrections (650),
**characterised by**:
acquiring, using the image acquisition assembly (436, 503), a reference image (502) comprising a plurality of image reference markings corresponding to a plurality of reference markings on a first surface of a calibration plate (448, 501) that is positioned parallel to a scanning area of the scanning system (444) and in the additive manufacturing device (400); and
determining an error function, wherein the error function represents a difference between the plurality of image reference markings in the reference image and the plurality of reference markings on the first surface of the calibration plate,
wherein the directing of the scanner beam is performed when the calibration plate (448,501) is not in the scanning area,
wherein the acquiring of the reference image (502) is performed using the image acquisition assembly (436,503) in a reference position, and
wherein the determining of the scanner corrections is further based on the error function.

2. The method of claim 1, wherein each of the plurality of reference markings is located at a predefined coordinate position.

3. The method of claim 1, wherein the plurality of reference markings comprise an ordered pattern of circular spots.

4. The method of claim 3, wherein the ordered pattern is a grid pattern.

5. The method of claim 1, wherein the first surface of the calibration plate is positioned in the same xy plane as a build surface in the scanning area when acquiring the reference image.

6. The method of claim 1, wherein the image acquisition assembly is fixed in a location in or around the additive manufacturing device.

7. The method of claim 1, wherein the image acquisition assembly comprises an optical camera.

8. The method of claim 1, wherein determining the error function further comprises:
selecting a region of interest in the reference image;
detecting features in the region of interest, wherein the features comprise a selection of the plurality of image reference markings in the reference image;
determining observed coordinate positions for the features; and
comparing the observed coordinate positions of features in the reference image with true coordinate positions of the plurality of reference markings on the calibration plate.

9. The method of claim 1, wherein the scan markings comprise a pattern of spots, lines, or crosses.

10. The method of claim 1, wherein the scan image comprises a single image or a stack of images.

11. The method of claim 1, wherein the scan image is acquired before all of the scan markings are applied.

12. The method of claim 1, wherein the scanning system applies the scan markings with a pilot laser.

13. The method of claim 1, wherein determining scanner corrections further comprises:
selecting a region of interest in the scan image;
detecting features in the region of interest, wherein the features comprise a selection of the plurality of image scan markings in the scan image;
determining observed coordinate positions for the features;
applying the error function to obtain true coordinate positions of the features;
obtaining deviation values between the true coordinate positions and the predefined locations in the scanning area; and
determining scanner corrections based on the deviation values.

14. The method of claim 13, wherein obtaining deviation values further comprises surface fitting.

15. The method of claim 1, wherein calibrating the scanning system comprises adjusting coordinate locations of a scanner in the scanning system by a distance or a factor corresponding to the scanner corrections.

16. The method of claim 1, further comprising calibrating at least a second scanning system, and aligning a plurality of scan fields corresponding to the at least the second scanning system and the scanning system in order to obtain a single scan field.

17. The method of claim 1, wherein the scanning system is a composite scanning system comprising a plurality of scanning systems, wherein the composite scanning system corresponds to a single scan field comprising a plurality of scan fields corresponding to the plurality of scanning systems, and wherein the error function is used to calibrate each of the plurality of scan fields.

18. A system for calibrating a scanning system (444) in an additive manufacturing device (400), the system being configured to:
direct a scanner beam from the scanning system (444) to apply scan markings at a plurality of predefined locations in a scanning area;
acquire, using an image acquisition assembly (436, 503), a scan image comprising image scan markings corresponding to the scan markings;
determine scanner corrections based on position of the image scan markings and the predefined locations in the scanning area; and
calibrate the scanning system using the scanner corrections (650),
**characterised by** the system being configured to:
acquire, using the image acquisition assembly (436, 503), a reference image (502) comprising a plurality of image reference markings corresponding to a plurality of reference markings on a first surface of a calibration plate (448, 501) that is positioned parallel to a scanning area of the scanning system (444) and in the additive manufacturing device (400); and
determine an error function, wherein the error function represents a difference between the plurality of image reference markings in the reference image and the plurality of reference markings on the first surface of the calibration plate (448, 501)
wherein the directing of the scanner beam is performed when the calibration plate (448, 501) is not in the scanning area,
wherein the acquiring of the reference image is performed using the image acquisition assembly (436, 503) in a reference position, and
wherein the determining of the scanner corrections is further based on the error function.

## Patentansprüche

1. Computerimplementiertes Verfahren zur Kalibrierung eines Scansystems in einer Vorrichtung zur additiven Fertigung (400), das Verfahren weist auf:
Richten eines Scannerstrahls des Scansystems zum Auftragen von Scanmarkierungen an einer Mehrzahl von vorbestimmten Positionen in einem Scanbereich;
Erfassen, unter Verwendung eines Bilderfassungsaufbaus (436, 503), eines Scanbilds, das den Scanmarkierungen (610) entsprechende Bildscanmarkierungen aufweist;
Ermitteln von Scannerkorrekturen basierend auf Positionen der Bildscanmarkierungen und den vorbestimmten Positionen in dem Scanbereich; und
Kalibrieren des Scansystems (444) unter Verwendung der Scannerkorrekturen (650),
**gekennzeichnet durch**:
Erfassen, unter Verwendung des Bilderfassungsaufbaus (436, 503), eines Referenzbildes (502), das eine Mehrzahl von Bildreferenzmarkierungen entsprechend einer Mehrzahl von Referenzmarkierungen auf einer ersten Oberfläche einer Kalibrierungsplatte (448, 501) aufweist, die parallel zu einem Scanbereich des Scansystems (444) und in der Vorrichtung zur additiven Fertigung (400) positioniert ist; und
Ermitteln einer Fehlerfunktion, bei dem die Fehlerfunktion eine Abweichung zwischen der Mehrzahl von Bildreferenzmarkierungen in dem Referenzbild und der Mehrzahl von Referenzmarkierungen auf der ersten Oberfläche der Kalibrierungsplatte darstellt,
bei dem das Richten des Scannerstrahls durchgeführt wird, wenn sich die Kalibrierungsplatte (448, 501) nicht in dem Scanbereich befindet,
bei dem das Erfassen des Referenzbilds (502) unter Verwendung des Bilderfassungsaufbaus (436, 503) in einer Referenzposition durchgeführt wird, und
bei dem das Ermitteln der Scannerkorrekturen weiter auf der Fehlerfunktion basiert.

2. Verfahren nach Anspruch 1, bei dem sich jede der Mehrzahl von Referenzmarkierungen an einer vorbestimmten Koordinatenposition befindet.

3. Verfahren nach Anspruch 1, bei dem die Mehrzahl von Referenzmarkierungen ein geordnetes Muster von kreisförmigen Punkten aufweist.

4. Verfahren nach Anspruch 3, bei dem das geordnete Muster ein Gittermuster ist.

5. Verfahren nach Anspruch 1, bei dem die erste Oberfläche der Kalibrierungsplatte in der selben xy-Ebene positioniert ist wie eine Bauoberfläche in dem Scanbereich, wenn das Referenzbild erfasst wird.

6. Verfahren nach Anspruch 1, bei dem der Bilderfassungsaufbau an einer Position in oder um die Vorrichtung zur additiven Fertigung fixiert ist.

7. Verfahren nach Anspruch 1, bei dem der Bilderfassungsaufbau eine optische Kamera aufweist.

8. Verfahren nach Anspruch 1, bei dem das Ermitteln der Fehlerfunktion weiter aufweist:
Auswählen eines Bereichs von Interesse in dem Referenzbild;
Erfassen von Merkmalen in dem Bereich von Interesse, bei dem die Merkmale eine Auswahl der Mehrzahl von Bildreferenzmarkierungen in dem Referenzbild umfassen;
Ermitteln beobachteter Koordinatenpositionen der Merkmale; und
Vergleichen der beobachteten Koordinatenpositionen von Merkmalen in dem Referenzbild mit wahren Koordinatenpositionen der Mehrzahl von Referenzmarkierungen auf der Kalibrierungsplatte.

9. Verfahren nach Anspruch 1, bei dem die Scanmarkierungen ein Muster von Punkten, Linien oder Kreuzen aufweisen.

10. Verfahren nach Anspruch 1, bei dem das Scanbild ein einzelnes Bild oder einen Stapel von Bildern aufweist.

11. Verfahren nach Anspruch 1, bei dem das Scanbild erfasst wird bevor alle Scanmarkierungen angebracht sind.

12. Verfahren nach Anspruch 1, bei dem das Scansystem die Scanmarkierungen mit einem Pilotlaser anbringt.

13. Verfahren nach Anspruch 1, bei dem das Ermitteln der Scannerkorrekturen weiter aufweist:
Auswählen eines Bereichs von Interesse in dem Scanbild;
Erfassen von Merkmalen in dem Bereich von Interesse, bei dem die Merkmale eine Auswahl der Mehrzahl von Bildscanmarkierungen in dem Scanbild umfassen;
Ermitteln beobachteter Koordinatenpositionen der Merkmale;
Anwenden der Fehlerfunktion, um wahre Koordinatenpositionen der Merkmale zu erhalten;
Erhalten von Abweichungswerten zwischen den wahren Koordinatenpositionen und den vorbestimmten Positionen in dem Scanbereich; und
Ermitteln der Scannerkorrekturen basierend auf den Abweichungswerten.

14. Verfahren nach Anspruch 13, bei dem das Erhalten der Abweichungswerte weiter Oberflächenfitting umfasst.

15. Verfahren nach Anspruch 1, bei dem das Kalibrieren des Scansystems Einstellen der Koordinatenpositionen eines Scanners in dem Scansystem durch einen Abstand oder einen Faktor entsprechend den Scannerkorrekturen umfasst.

16. Verfahren nach Anspruch 1, das weiter Kalibrieren mindestens eines zweiten Scansystems und Ausrichten einer Mehrzahl von Scanfeldern entsprechend dem mindestens zweiten Scansystem und dem Scansystem zum Erhalten eines einzelnen Scanfeldes umfasst.

17. Verfahren nach Anspruch 1, bei dem das Scansystem ein zusammengesetztes Scansystem ist, das eine Mehrzahl von Scansystemen aufweist, bei dem das zusammengesetzte Scansystem einem einzelnen Scanfeld entspricht, das eine Mehrzahl von Scanfeldern entsprechend der Mehrzahl von Scansystemen aufweist, und bei dem die Fehlerfunktion verwendet wird, um jedes der Mehrzahl von Scanfeldern zu kalibrieren.

18. System zur Kalibrierung eines Scansystems (444) in einer Vorrichtung zur additiven Fertigung (400), das System ist konfiguriert zum
Richten eines Scannerstrahls des Scansystems (444) zum Auftragen von Scanmarkierungen an einer Mehrzahl von vorbestimmten Positionen in einem Scanbereich;
Erfassen, unter Verwendung eines Bilderfassungsaufbaus (436, 503), eines Scanbilds, das den Scanmarkierungen entsprechende Bildscanmarkierungen aufweist;
Ermitteln von Scannerkorrekturen basierend auf Positionen der Bildscanmarkierungen und den vorbestimmten Positionen in dem Scanbereich; und
Kalibrieren des Scansystems unter Verwendung der Scannerkorrekturen (650),
**dadurch gekennzeichnet, dass** das System konfiguriert ist zum
Erfassen, unter Verwendung des Bilderfassungsaufbaus (436, 503), eines Referenzbildes (502), das eine Mehrzahl von Bildreferenzmarkierungen entsprechend einer Mehrzahl von Referenzmarkierungen auf einer ersten Oberfläche einer Kalibrierungsplatte (448, 501) aufweist, die parallel zu einem Scanbereich des Scansystems (444) und in der Vorrichtung zur additiven Fertigung (400) positioniert ist; und
Ermitteln einer Fehlerfunktion, bei dem die Fehlerfunktion eine Abweichung zwischen der Mehrzahl von Bildreferenzmarkierungen in dem Referenzbild und der Mehrzahl von Referenzmarkierungen auf der ersten Oberfläche der Kalibrierungsplatte (448, 501) darstellt, bei dem das Richten des Scannerstrahls durchgeführt wird, wenn sich die Kalibrierungsplatte (448, 501) nicht in dem Scanbereich befindet,
bei dem das Erfassen des Referenzbilds unter Verwendung des Bilderfassungsaufbaus (436, 503) in einer Referenzposition durchgeführt wird, und
bei dem das Ermitteln der Scannerkorrekturen weiter auf der Fehlerfunktion basiert.

## Revendications

1. Procédé mis en oeuvre par ordinateur pour calibrer un système de balayage (444) dans un dispositif de fabrication additive (400), le procédé comprenant :
la direction d'un faisceau de balayage à partir du système de balayage pour appliquer des marquages de balayage à une pluralité d'emplacements prédéfinis dans une zone de balayage ;
l'acquisition, en utilisant un ensemble d'acquisition d'images (436, 503),
d'une image de balayage comprenant des marquages de balayage d'image correspondant aux marquages de balayage (610) ;
la détermination des corrections du scanner en fonction de la position des marquages de balayage d'image et des emplacements prédéfinis dans la zone de balayage ; et
l'étalonnage du système de balayage (444) en utilisant les corrections de balayage (650),
**caractérisé par** :
l'acquisition, en utilisant l'ensemble d'acquisition d'image (436, 503), d'une image de référence (502) comprenant une pluralité de marquages de référence d'image correspondant à une pluralité de marquages de référence sur une première surface d'une plaque d'étalonnage (448, 501) qui est positionnée parallèlement à une zone de balayage du système de balayage (444) et dans le dispositif de fabrication additive (400) et la détermination d'une fonction d'erreur, dans laquelle la fonction d'erreur représente une différence entre la pluralité de marquages de référence d'image dans l'image de référence et la pluralité de marquages de référence sur la première surface de la plaque d'étalonnage,
dans lequel la direction du faisceau de balayage est effectuée lorsque la plaque d'étalonnage (448, 501) n'est pas dans la zone de balayage,
dans lequel l'acquisition de l'image de référence (502) est effectuée en utilisant l'ensemble d'acquisition d'images (436, 503) dans une position de référence, et
dans lequel la détermination des corrections de balayage est en outre basée sur la fonction d'erreur.

2. Procédé selon la revendication 1, dans lequel chacune de la pluralité de marquages de référence est située dans une position de coordonnées prédéfinie.

3. Procédé selon la revendication 1, dans lequel la pluralité de marquages de référence comprend un motif ordonné de points circulaires.

4. Procédé selon la revendication 3, dans lequel le modèle ordonné est un modèle à grille.

5. Procédé selon la revendication 1, dans lequel la première surface de la plaque d'étalonnage est positionnée dans le même plan xy qu'une surface de construction dans la zone de balayage lors de l'acquisition de l'image de référence.

6. Procédé selon la revendication 1, dans lequel l'ensemble d'acquisition d'images est fixé à un emplacement dans ou autour du dispositif de fabrication additive.

7. Procédé selon la revendication 1, dans lequel l'ensemble d'acquisition d'image comprend une caméra optique.

8. Procédé selon la revendication 1, dans lequel la détermination de la fonction d'erreur comprend en outre :
la sélection d'une région d'intérêt dans l'image de référence ;
la détection des caractéristiques dans la région d'intérêt, dans lequel les caractéristiques comprennent une sélection de la pluralité de marquages de référence d'image dans l'image de référence ;
la détermination des positions de coordonnées observées pour les caractéristiques ; et
la comparaison des positions de coordonnées observées des caractéristiques dans l'image de référence avec les positions de coordonnées réelles de la pluralité de marques de référence sur la plaque d'étalonnage.

9. Procédé selon la revendication 1, dans lequel les marques de balayage comprennent un motif de points, de lignes ou de croix.

10. Procédé selon la revendication 1, dans lequel l'image de balayage comprend une image unique ou une pile d'images.

11. Procédé selon la revendication 1, dans lequel l'image de balayage est acquise avant que tous les marquages de balayage ne soient appliqués.

12. Procédé selon la revendication 1, dans lequel le système de balayage applique les marquages de balayage avec un laser pilote.

13. Procédé selon la revendication 1, dans lequel la détermination de corrections de balayage comprend en outre :
la sélection d'une région d'intérêt dans l'image de balayage ;
la détection des caractéristiques dans la région d'intérêt, dans lequel les caractéristiques comprennent une sélection de la pluralité de marquages de balayage d'image dans l'image de balayage ;
la détermination des positions de coordonnées observées pour les caractéristiques ;
l'application de la fonction d'erreur pour obtenir des coordonnées réelles des caractéristiques ;
l'obtention des valeurs d'écart entre les positions de coordonnées réelles et les emplacements prédéfinis dans la zone de balayage ; et
la détermination des corrections du scanner sur la base des valeurs d'écart.

14. Procédé selon la revendication 13, dans lequel l'obtention des valeurs d'écart comprend en outre une adaptation de surface.

15. Procédé selon la revendication 1, dans lequel l'étalonnage du système de balayage comprend l'ajustement des emplacements de coordonnées d'un scanner dans le système de balayage par une distance ou un facteur correspondant aux corrections du scanner.

16. Procédé selon la revendication 1, comprenant en outre l'étalonnage d'au moins un second système de balayage, et l'alignement d'une pluralité de champs de balayage correspondant au moins au second système de balayage et au système de balayage afin d'obtenir un champ de balayage unique.

17. Procédé selon la revendication 1, dans lequel le système de balayage est un système de balayage composite comprenant une pluralité de systèmes de balayage, dans lequel le système de balayage composite correspond à un champ de balayage unique comprenant une pluralité de champs de balayage correspondant à la pluralité de systèmes de balayage, et dans lequel la fonction d'erreur est utilisée pour étalonner chacun de la pluralité de champs de balayage.

18. Système pour étalonner un système de balayage (444) dans un dispositif de fabrication additive (400), le système étant configuré pour :
diriger un faisceau de balayage à partir du système de balayage (444) pour appliquer des marquages de balayage à une pluralité d'emplacements prédéfinis dans une zone de balayage ;
acquérir, en utilisant un ensemble d'acquisition d'image (436, 503), une image de balayage comprenant des marquages de balayage d'image correspondant aux marquages de balayage ;
déterminer des corrections du scanner en fonction de la position des marquages de balayage d'image et des emplacements prédéfinis dans la zone de balayage ; et
étalonner le système de balayage en utilisant les corrections de balayage (650),
**caractérisé par le fait que** le système est configuré pour :
acquérir, en utilisant l'ensemble d'acquisition d'image (436, 503), une image de référence (502) comprenant une pluralité de marquages de référence d'image correspondant à une pluralité de marquages de référence sur une première surface d'une plaque d'étalonnage (448, 501) qui est positionnée parallèlement à une zone de balayage du système de balayage (444) et dans le dispositif de fabrication additive (400) ; et
déterminer une fonction d'erreur, dans laquelle la fonction d'erreur représente une différence entre la pluralité de marquages de référence d'image dans l'image de référence et la pluralité de marques de référence sur la première surface de la plaque d'étalonnage (448, 501)
dans lequel la direction du faisceau de balayage est effectuée lorsque la plaque d'étalonnage (448, 501) n'est pas dans la zone de balayage,
dans lequel l'acquisition de l'image de référence est effectuée en utilisant l'ensemble d'acquisition d'image (436, 503) dans une position de référence, et
dans lequel la détermination des corrections de balayage est en outre basée sur la fonction d'erreur.
